# EUROPEAN PATENT SPECIFICATION

(11) **EP 2 045 482 B1**
(45) Date of publication and mention of the grant of the patent: **24.11.2010**
(21) Application number: 08165826.2
(22) Date of filing: 03.10.2008
(51) Int. Cl.: F16D 66/00, F16D 65/097, F16D 55/00

(54) **Disc brake device, spring and vehicle and using such a disc brake device or spring**
Scheibenbremsvorrichtung, Feder und Fahrzeug mit einer solchen Scheibenbremsvorrichtung oder Feder
Dispositif de frein à disque, ressort et véhicule utilisant ledit dispositif de frein à disque ou ressort

(30) Priority: 04.10.2007 SE 0702220
(43) Date of publication of application: 08.04.2009
(73) Proprietor: Scania CV AB, 151 87 Södertälje (SE)
(72) Inventor: Harju, Roberth, 151 56, Södertälje (SE); Roggenbuck, Philip, 640 43, Ärla (SE)

(56) References cited:
- EP-A- 0 326 774
- EP-A- 0 536 008
- EP-A- 0 737 824
- EP-A- 1 862 691
- DE-A1- 3 023 105
- DE-A1- 3 726 232
- US-A- 5 687 817

## Description

### TECHNICAL FIELD

The present invention relates to a disc brake device and a spring.

The invention also relates to a vehicle provided with such a disc brake device or spring and also the use of such a disc brake device or spring.

### BACKGROUND

In many different machines there is a need to brake a rotary motion, e.g. disc brakes are used for braking the rotary motion of a wheel about a wheel shaft on a vehicle.

A typical disc brake on a vehicle comprises a brake yoke adapted to gripping about a brake disc connected to the wheel shaft, and to varying the braking force by variation of the gripping force. The brake yoke comprises often, but not always, a lining carrier mounted firmly on some non-rotating part of the wheel suspension, and a yoke saddle supported for axial and linear movement on the lining carrier. The brake linings rest on the lining carrier on each side of the brake disc and are surrounded by the yoke saddle, and a brake piston adapted to controllably pressing the brake linings together about the brake disc is arranged in the yoke saddle. A reason for the yoke saddle being supported for linear movement along the shaft is that the yoke saddle often lacks brake pistons on one side of the brake disc. The yoke saddle being movable means that substantially equal forces are exerted on the brake disc by the brake linings on each side of the brake disc, and the brake linings will in the ideal case wear equally on each side of the brake disc. This is desirable in that changing all the brake linings of a brake on the same occasion is less expensive.

An automatic adjustment mechanism ensures that the clearance between the brake linings and the brake disc as the linings wear remains small. The automatic adjustment mechanism rotates an adjusting screw which reduces the clearance if a predetermined maximum retraction movement is exceeded when the brake pistons move back after a brake application.

Unfortunately, it sometimes happens that one of two opposite brake linings wears more quickly than the other. The result is non-optimum use of the wearing capacity of the linings, since both of the linings in a yoke or even, generally, all of the linings on a shaft are, for practical reasons, changed at the same time.

As taking wheels off and opening brake yoke covers to inspect the wear state of brake linings is a laborious process, various solutions have been developed for indicating when it is time to change linings. For example, using an electrical conductor which runs through the wearing material of a brake lining has been tried. When the lining wears down to the electrical conductor and the latter comes into contact with the brake disc, the result is an electrical indication that it is time to change the lining concerned. This device is very rarely used, since the tough environment at the wheel, involving vibrations, moisture and dirt, results in its producing an unreliable signal.

The most commonly used solution today is to have on the automatic adjustment mechanism of the brake yoke an electronic sensor device which measures how many revolutions the aforesaid adjusting screw has turned. Although this device is very reliable, it nevertheless has a shortcoming in that since it is the total lining wear on both of the linings of a disc brake that is measured, the linings have to be inspected manually in the workshop as early as when 50% of the combined wearing capacity of the two linings has worn away, in case the linings have for any reason not worn equally.

Another problem which may arise is that the linings do not retract far enough when the brake is released, e.g. a clearance may arise between a brake lining and the corresponding brake piston instead of between the brake lining and the disc. If this occurs, the brake lining continually abuts against the brake disc, hampering the fuel economics and causing adverse environmental effects and increasing the risk of the linings wearing unevenly.

Brake linings are usually changed via an assembly aperture in the yoke saddle. Typically there is some form of cover and/or lining retainer mechanism over the assembly aperture, and a brake lining spring is adapted to exerting a parting spring force between the cover/lining retainer and a brake lining in order to press the lining against the lining carrier in the direction towards the shaft. The main functions of the brake lining spring are to prevent the lining from vibrating and moving in the yoke saddle when the vehicle is in motion, and to create a suitable hysteresis in the yoke saddle's axial movement relative to the lining carrier in order to prevent the linings coming into contact with the brake disc when no braking force is applied across the disc.

### SUMMARY OF THE INVENTION

An object of the invention is to propose a novel disc brake device which indicates when it is time to change brake linings and which reduces the risk of the brake linings abutting against the brake disc even when the brake is not applied.

An aspect of the invention is achieved with a disc brake device comprising a brake disc with two opposite friction surfaces and adapted to being connected to a rotatable shaft; and a brake yoke adapted to being connected to a non-rotatable part of a machine or vehicle, and to moving freely from the brake disc and straddling the brake disc with two sidepieces comprised in the brake yoke and each having an extent along part of the respective friction surface; said brake yoke being further provided with brake linings and a brake piston which is arranged in a sidepiece and is adapted to controllably pressing the brake lining against the brake disc, which disc brake device comprises an indicator spring adapted to being tensioned upon the fitting of a brake lining, which indicator spring comprises a sacrificial portion adapted to being connected to the brake lining and having an extent such that the sacrificial portion is worn away by rubbing against the brake disc or, alternatively, is worn free from a fastening in the wearing material of the brake lining, when the wear on the brake lining reaches a predetermined level; and an indicator element which is connected to the indicator spring and is adapted to performing, under the tensioning force of the indicator spring, a springing movement when the sacrificial portion has been rubbed away or been worn free from a fastening in the wearing material of the brake lining, thereby indicating that the wear on the brake lining has reached a predetermined level.

Another aspect of the invention is achieved with a disc brake device comprising a brake disc with two opposite friction surfaces and adapted to being connected to a rotatable shaft; and a brake yoke adapted to being connected to a non-rotatable part of a machine or vehicle, and to moving freely from the brake disc and straddling the brake disc with two sidepieces comprised in the brake yoke which each have an extent along part of the respective friction surface; said brake yoke being further provided with brake linings and a brake piston which is arranged in a sidepiece and is adapted to controllably pressing the brake lining against the brake linings coming into contact with the brake disc when no braking force is applied across the disc.

US-A-5687817 shows a disc brake device comprising a disc brake with two opposite friction surfaces rotating with a shaft and a brake yoke which is non rotatable and straddling the disc and having brake linings to be pressed against the friction surfaces for braking the shaft Said disc brake has a return spring adapted to be pulling or pushing the linings apart in the axial direction. However there is no single element, which in a distinct manner indicates excessive wear of the brake pad linings.

EP-A-326774 shows a spring in the form of a wire spring adapted to be fitted in a brake yoke. A lining retainer section of the spring forms an arc and the respective end of the arc is adapted to abutting against a brake lining. The spring has a connection section which connects the spring to a lining retainer or an assembly aperture cover and the spring is tensioned to springingly press against the lining retainer. However nor does this prior art document show a single element, which in a distinct manner indicates excessive wear of the brake pad linings.

### SUMMARY OF THE INVENTION

An object of the invention is to propose a novel disc brake device which indicates when it is time to change brake linings and which reduces the risk of the brake linings abutting against the brake disc even when the brake is not applied.

An aspect of the invention is achieved with a disc brake device comprising a brake disc with two opposite friction surfaces and adapted to being connected to a rotatable shaft; and a brake yoke adapted to being connected to a non-rotatable part of a machine or vehicle, and to moving freely from the brake disc and straddling the brake disc with two sidepieces comprised in the brake yoke and each having an extent along part of the respective friction surface; said brake yoke being further provided with brake linings and a brake piston which is arranged in a sidepiece and is adapted to controllably pressing the brake lining against the brake disc, which disc brake device comprises an indicator spring adapted to being tensioned upon the fitting of a brake lining, which indicator spring comprises a sacrificial portion adapted to being connected to the brake lining and having an extent such that the sacrificial portion is worn away by rubbing against the brake disc or, alternatively, is worn free from a fastening in the wearing material of the brake lining, when the wear on the brake lining reaches a predetermined level; and an indicator element which is connected to the indicator spring and is adapted to performing, under the tensioning force of the indicator spring, a springing movement when the sacrificial portion has been rubbed away or been worn free from a fastening in the wearing material of the brake lining, thereby indicating that the wear on the brake lining has reached a predetermined level.

The return spring and the indicator spring take the form with advantage of one and the same spring component, since this minimises the number of components of the brake device. The number of components may be further reduced by the spring being adapted to pushing a brake lining radially towards the shaft. The spring may take the form of, for example, a wire spring, since such a spring makes it easier to achieve springing in a number of different directions and to combine a number of different spring functions in one and the same component, but it is also possible, for example, for a leaf spring to be configured in such a way as to combine the desired characteristics in a single component.

If the spring is also adapted to pushing a brake lining radially in the direction towards the shaft, any possible drawer effect can be reduced by the spring's abutment surfaces against the lining being arranged as far as possible from one another; the drawer effect is also further reduced by the spring forces with which the abutment surfaces of the spring press on the brake lining being substantially independent of one another.

The invention is not limited to braking the rotary motion of a wheel shaft; brake yokes in combination with brake discs are also used for braking other motions, whether rotary or linear, e.g. in other machines than vehicles. Such applications also fall within the scope of the invention and are therefore covered by the attached claims. Other features and advantages of the invention may be indicated by the claims and the description of embodiment examples set out below.

### BRIEF DESCRIPTION OF THE DRAWINGS

FIG. 1 is a schematic general view as seen obliquely from above of a disc brake device according to an embodiment of the invention.
FIG. 2 is a schematic view from in front, partly in section, of a brake device according to an embodiment of the invention.
FIG. 3 is an illustration of an embodiment of a brake lining/indicator/return spring according to the invention.
FIGS. 4A-B depict a detail view of a section of a brake lining and a spring according to an embodiment of the invention. They illustrate the indicator function of the spring which in FIG. 4A is in a tensioned state and in FIG. 4B is in an unloaded state.
FIG. 5 is a schematic general view as seen obliquely from above of a disc brake device according to an embodiment of the invention.
FIGS. 6A-D illustrate an embodiment of a brake lining/indicator/return spring according to the invention. FIG. 6A is a view from above of an unloaded spring; FIG. 6B is a view from above of a spring fitted on a lining carrier above a brake lining; FIG. 6C is a side view of a spring fitted on a brake lining; and FIG. 6D is a side view of the same spring when its sacrificial section has been worn away.

### DETAILED DESCRIPTION OF EMBODIMENT EXAMPLES

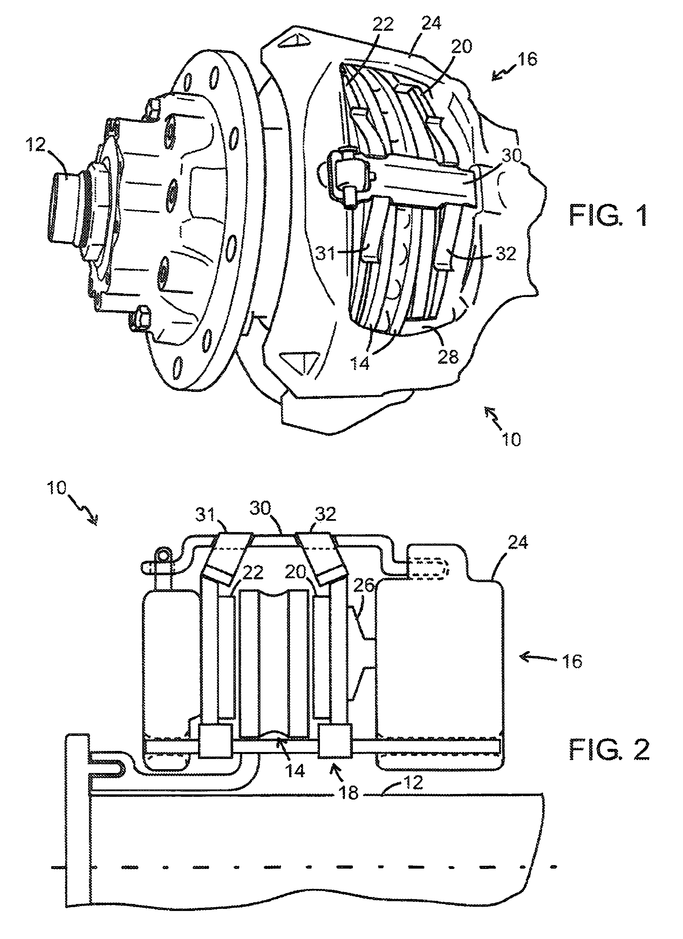

FIG. 1 depicts an example of an embodiment of a disc brake device according to the invention. A disc brake device 10 is fitted to, and adapted to braking, a wheel shaft 12. The disc brake device 10 comprises a brake disc 14 mounted on the wheel shaft 12, and a brake yoke 16 fitted non-rotatably and adapted to gripping with controllable force about the brake disc 14.

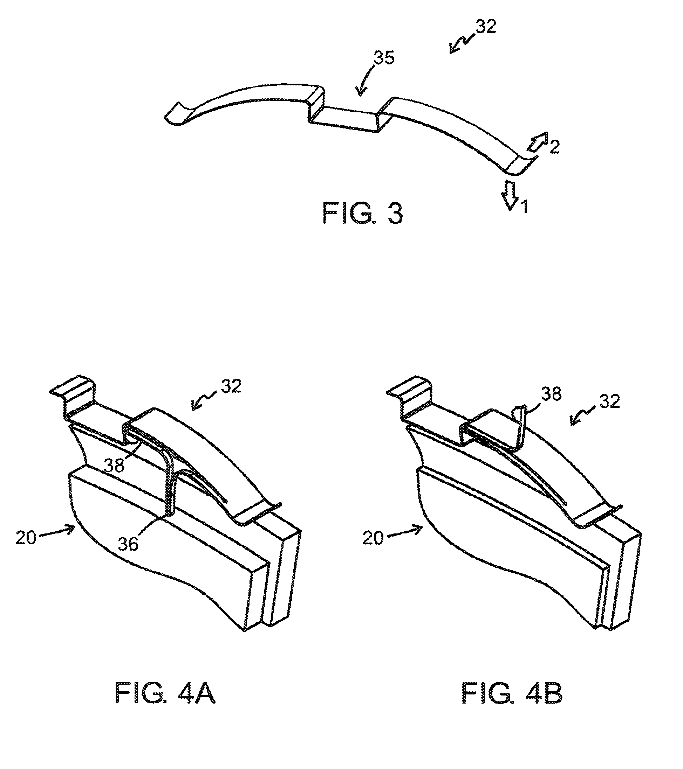

The brake yoke 16 in FIG. 2 comprises a lining carrier 18 on which a first and a second brake lining 20, 22 rest. A yoke saddle 24 which surrounds the brake linings 20, 22 rests above, and is axially supported for movement in the lining carrier 18. A brake piston 26 is adapted, upon brake application, to pressing the first brake lining 20 against the brake disc 14, whereupon corresponding reaction forces push the yoke saddle 24 and hence the second brake lining 22 with substantially the same force in the other direction, i.e. towards the other side of the brake disc 14. In the upper portion of the yoke saddle 24 there is an assembly aperture 28 (FIG. 1) which makes it possible to change the brake linings 20, 22 without removing the brake yoke 16. Above the assembly aperture 28 there is a removable lining retainer 30 adapted, with a brake lining spring 32 which is fastened to the lining retainer 30 and takes the form of a leaf spring, to pushing the brake lining 20 radially towards the shaft 12 and axially away from the disc 14. A tab (FIGS. 4A-B) on the leaf spring 32 is adapted to indicating when the wear on the brake lining 20 reaches a predetermined level. A corresponding leaf spring 31 for the lining 22 is also depicted in the diagram.

FIG. 3 depicts an example of how a brake lining spring 31, 32 may be configured. A bent portion 35 in the form of an undercut trapezoidal profile allows a releasable connection relative to the lining retainer. The spring 32 is bent in such a way that it is adapted to pushing a lining 20 both downwards (arrow 1) and axially (arrow 2). The axial force is provided, for example, by the respective arms of the spring being somewhat rotated or by the bent portion 35 giving them a slope relative to the plane of the lining retainer. The spring 32 is further provided with a curved tab (not depicted in FIG. 3), the configuration and function of which are illustrated in more detail in FIGS. 4A-B.

FIGS. 4A-B are detail views of an embodiment of a spring 32 which comprises a tab with indicator function. FIG. 4A depicts the spring in a tensioned state. A sacrificial portion belonging to the spring 32 is connected to the brake lining 20 in such a way that when the connection is worn away against the brake disc 14, the spring 32 will describe a springing movement whereby an indicator element 38 will spring out through the assembly aperture 28 of the brake piston and indicate that the brake lining 20 has reached a predetermined wear level. The connection may be by adhesive bonding or soldering, a tab on the brake lining being adapted to hooking firmly in a bend in the sacrificial portion of the spring, or some other suitable connection.

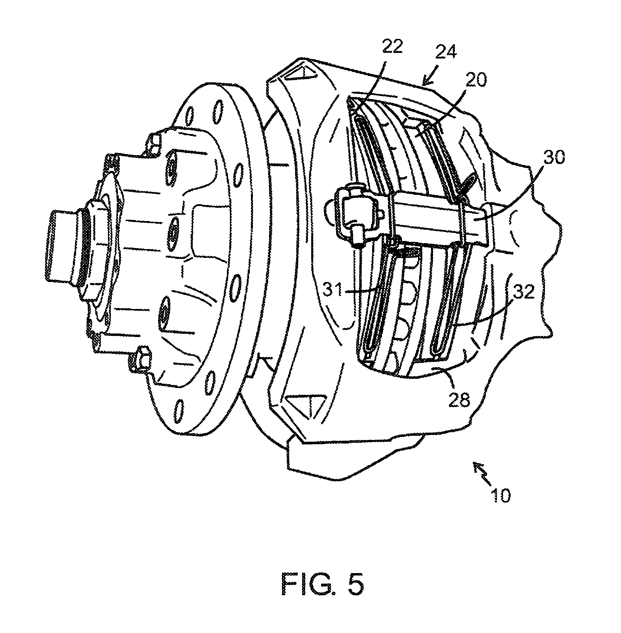

FIG. 5 depicts another example of an embodiment of a disc brake device according to the invention, in which the springs 31, 32 take the form of wire springs. One end of each wire spring 31, 32 runs down through a hole in the respective brake lining 22, 20 and up again to abut and press against the lining retainer 30.

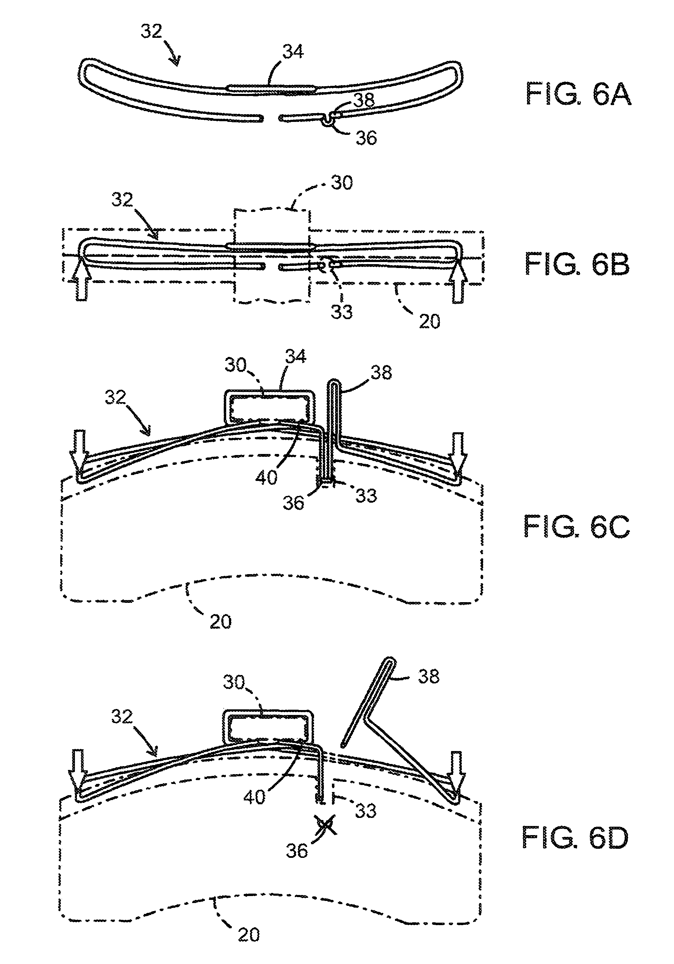

FIG. 6A is a view from above of an unloaded spring 32 according to the embodiment in FIG. 5. In FIGS. 6B-D this spring 32, a brake lining 20 and the lining retainer 30 are raised from the yoke 16 to illustrate more clearly the function of the spring 32 in cooperation with the lining retainer 30 and the lining 20. The wire spring 32 is curved in a double arc in which the respective end of the arc is adapted to abutting against the brake lining 20 and to springingly pushing it radially in the direction towards the shaft (the arrows in FIG. 6C) and axially away from the disc (the arrows in 6B). The wire spring 32 further has a section 34 adapted to surrounding, and connecting the spring 32 to, the lining retainer 30; a sacrificial section 36 adapted to running down through a hole 33 in the wearing material of the brake lining 20; an indicator section 38 and a section 40 adapted to being tensioned and springingly abutting and pressing up against the lining retainer 30. In the assembled state (FIGS. 6B-C) the lining retainer 30 will, via the section 40, hold down the indicator section 38 which would otherwise, owing to the tensioning of the spring, endeavour to move away from the shaft 12 (FIG. 5). When the sacrificial section 36 has worn away (FIG. 6D) against the brake disc 14 (FIG. 5), the indicator section 38 springs up and indicates that the brake lining 20 has reached a predetermined worn-down level.

If the yoke is provided with a cover, the indicator element or indicator section may be adapted to springing up through an indicating hole in the cover, but the indication may be read in many ways, e.g. visually, mechanically, optically or electromechanically. The indication may also be connected to a warning lamp in the vehicle's instrument panel, to the vehicle's computer or by radio to, for example, a service station.

Other springs and combinations of springs than wire springs and leaf springs may be used for implementing the invention and be covered by the attached claims. For example, a brake lining spring in the form of a leaf spring may be combined with an indicator spring in the form of a leaf, wire or coil spring provided with a sacrificial section and/or an abradable connection to a lining.

The spring need not necessarily be connected to the lining retainer by surrounding it as illustrated in the diagrams. It may be connected in some other way, e.g. by a fastening device, or be connected to some other part of the yoke. In fact, it is not even necessary that the spring be connected to the yoke; it may instead be fastened to, for example, the brake lining, or be tensioned in the space between the brake lining and some point on the yoke by its own tensioning force. Nor is it necessary that the spring be worn away in order to achieve an indicator function; other embodiments may for example comprise the spring being worn free from a fastening, e.g. from adhesive bonding or soldering, in the wearing material of the brake lining and thereby be afforded the possibility of performing a springing movement. The fastening need not be arranged through a hole in the wearing material, as it may equally well be arranged in a slit or on an edge of the wearing material at a position situated at a suitable distance from the lining plate on which the wearing material is arranged.

Nor need the lining retainer be configured as illustrated; it may also take other forms, e.g. that of a cover covering the whole of the assembly aperture, and/or be provided with various kinds of means for releasable connection to a brake lining spring/indicator spring/return spring.

## Claims

1. A disc brake device comprising
a brake disc (14) with two opposite friction surfaces and adapted to being connected to a rotatable shaft (12); and
a brake yoke (16) adapted to being connected to a non-rotatable part of a machine or vehicle and to moving freely from the brake disc (14) and to straddling the latter with two sidepieces forming part of the brake yoke (16) and each having an extent along part of the respective friction surface; said brake yoke (16) being further provided with brake linings (20, 22) and a brake piston (26) which is arranged in a sidepiece and is adapted to controllably pressing the brake lining (20) against the brake disc (14),
said disc brake device being **characterised in that** it comprises an indicator spring (32) adapted to being tensioned upon the fitting of a brake lining (20), said indicator spring comprising
a sacrificial portion (36) which is connected to the indicator spring, is adapted to being connected to the brake lining (20) and has an extent such that the sacrificial portion (36), by rubbing against the brake disc (14), is worn away or, alternatively, is worn free from a fastening in the wearing material of the brake lining (20), when the wear on the brake lining (20) reaches a predetermined level; and
an indicator element (38) which is connected to the indicator spring (32) and is adapted to performing, under the tensioning force of the indicator spring (32), a springing movement when the sacrificial portion (36) has been worn away or, alternatively, is worn free from a fastening in the wearing material of the brake lining (20), thereby indicating that the wear on the brake lining (20) has reached the predetermined level.

2. A disc brake device according to claim 1 in which a return spring (32) is adapted to pulling or pushing the linings (20, 22) apart in the axial direction.

3. A disc brake device according to claim 1 in which the return spring and the indicator spring take the form of one and the same spring (32).

4. A disc brake device according to any one of claims 1-3, in which the spring (32) is also adapted to pushing a brake lining (20, 22) radially towards the shaft (12).

5. A disc brake device according to any one of claims 1-4, in which the spring (32) is a wire spring.

6. A disc brake device according to any one of claims 2-5, in which the yoke comprises a lining carrier (18) connected to a fixed point on a vehicle or machine, and a yoke saddle (24) which is supported for linear movement in the axial direction and comprises said lining retainer (30) and brake piston (26); and in which the abutment surface of the spring (32) against the brake lining (20, 22) constitutes a friction surface for the axial movement of the yoke saddle (24) relative to the brake lining (20, 22).

7. A disc brake device according to any one of claims 2-6, in which the spring (32) is adapted to having a first and a second abutment surface against the brake lining (20, 22) and has an extent such that the abutment surfaces are adapted to being situated substantially as far from one another as the portion of the edge of the brake lining (20, 22) which faces towards the assembly aperture (28) allows.

8. A disc brake device according to claim 7, in which the spring force with which the first abutment surface of the spring (32) presses on the brake lining (20, 22) is substantially independent of the spring force with which the second abutment surface of the spring (32) presses on the brake lining (20,22).

9. A spring in the form of a wire spring (32) adapted to being fitted in a brake yoke (16), said spring (32) comprising
a lining retainer section curved to form an arc in which the respective end of the arc is adapted to abutting against a brake lining (20);
a connecting section (34) adapted to connecting the spring (32) to a lining retainer (30) or an assembly aperture cover;
a tensioning section (40) adapted to being tensioned and to springingly abutting and pressing against the lining retainer (30) or the assembly aperture cover;
said spring being **characterised in that** the lining retainer section is adapted to springingly pushing the brake lining (20) radially towards a shaft (12) and axially away from a brake disc (14);
a sacrificial section (36) is adapted to being connected to the wearing material of the brake lining (20) in such a way that the sacrificial section is worn away when the brake lining has reached a predetermined wear level, whereby the tensioning section (40) separates from the rest of the spring (32); and that
an indicator section (38) is adapted to springing out through an assembly aperture (28) in the brake yoke (16) and/or through a hole in a cover over the assembly aperture (28) when the tensioning section (40) separates from the rest of the spring (32).

10. A vehicle provided with a disc brake device (10) according to any one of claims 1-8 or a spring (32) according to claim 9.

11. Using a disc brake device (10) according to any one of claims 1-8 for braking a rotary motion.

12. Using a spring (32) according to claim 9 for indicating that the wear on a brake lining has reached a predetermined level.

## Patentansprüche

1. Scheibenbremsvorrichtung, umfassend:
eine Bremsscheibe (14) mit zwei entgegengesetzten Bremsflächen und die dazu ausgebildet ist, mit einer drehbaren Welle (12) verbunden zu werden; und
einen Bremssattel (16), der dazu ausgebildet ist, mit einem nicht drehbaren Teil einer Maschine oder eines Fahrzeugs verbunden zu werden und sich frei von der Bremsscheibe (14) zu bewegen und letztere mit zwei Seitenteilen zu überspannen, die einen Teil des Bremssattels (16) bilden und jedes sich dabei entlang eines Teils der entsprechenden Bremsflächen erstreckt; wobei der Bremssattel (16) weiter mit Bremsbelägen (20, 22) und einem Bremskolben (26) versehen ist, welcher in einem Seitenteil angeordnet und dazu ausgebildet ist, steuerbar den Bremsbelag (20) gegen die Bremsscheibe (14) zu drücken,
wobei die Bremsscheibe **dadurch gekennzeichnet ist,**
**dass** sie eine Anzeigefeder (32) umfasst, die dazu ausgebildet ist, durch das Anbringen an dem Bremsbelag (20) gespannt zu werden, wobei die Anzeigefeder umfasst:
einen Verschleißbereich (36), welcher mit der Anzeigefeder verbunden ist und dazu ausgebildet ist, mit dem Bremsbelag (20) verbunden zu werden, und eine solche Erstreckung aufweist, dass der Verschleißbereich (36) durch Reiben an der Bremsscheibe (14) abgetragen wird, oder alternativ, von einer Befestigung in dem Verschleißmaterial des Bremsbelags (20) freikommt, wenn die Abnutzung an dem Bremsbelag (20) ein vorgegebenes Ausmaß erreicht; und
ein Anzeigeelement (38), das mit der Anzeigefeder (32) verbunden und dazu ausgebildet ist, unter der Spannkraft der Anzeigefeder (32), eine Sprung- bzw. Federbewegung auszuführen, wenn der aufrauende Bereich (36) abgetragen wurde oder alternativ, von einer Befestigung in dem Verschleißmaterial des Bremsbelags (20) frei gekommen ist, um dabei anzuzeigen, dass die Abnutzung an dem Bremsbelag (20) einen vorgegebenen Grad erreicht hat.

2. Scheibenbremsvorrichtung nach Anspruch 1, in welcher eine Rückstellfeder (32) dazu ausgebildet ist, die Beläge (20, 22) in axialer Richtung auseinander zu ziehen oder zu drücken.

3. Scheibenbremsvorrichtung nach Anspruch 1, in welcher die Rückstellfeder und die Anzeigefeder ein und dieselbe Feder (32) sind.

4. Scheibenbremsvorrichtung nach einem der Ansprüche 1 bis 3, in welcher die Feder (32) auch dazu ausgebildet ist, einen Bremsbelag (20, 22) radial in Richtung der Welle (12) zu drücken.

5. Scheibenbremsvorrichtung nach einem der Ansprüche 1 bis 4, in welcher die Feder (32) eine Drahtfeder ist.

6. Scheibenbremsvorrichtung nach einem der Ansprüche 2 bis 5, in welcher der Bremssattel einen Belagträger (18), der an einem bestimmten Punkt an einem Fahrzeug oder einer Maschine verbunden ist, und einen Sattel (24) umfasst, welcher für eine lineare Bewegung in axialer Richtung gelagert ist und den Belaghalter (30) und den Bremskolben (26) umfasst; und in welchem die Angrenzungsfläche der Feder (32) an dem Bremsbelag (20, 22) eine Reibfläche für die axiale Bewegung des Sattels (24) bezüglich des Bremsbelags (20, 22) bildet.

7. Scheibenbremsvorrichtung nach einem der Ansprüche 2 bis 6, in welcher die Feder (32) ausgebildet ist, eine erste und eine zweite Angrenzungsfläche an dem Bremsbelag (20, 22) aufzuweisen, und eine solche Erstreckung aufweist, dass die Angrenzungsflächen dazu ausgebildet sind, im Wesentlichen soweit voneinander gelegen zu sein, wie es der Bereich des Rands des Bremsbelags (20, 22), welcher in Richtung der Baugruppenöffnung (28) gerichtet ist, erlaubt.

8. Scheibenbremsvorrichtung nach Anspruch 7, in welcher die Federkraft, mit welcher die erste Angrenzungsfläche der Feder (32) auf den Bremsbelag (20, 22) drückt, im Wesentlichen unabhängig von der Federkraft ist, mit welcher die zweite Angrenzungsfiläche der Feder (32) auf den Bremsbelag (20, 22) drückt.

9. Feder in der Gestalt einer Drahtfeder (32), die dazu ausgebildet ist, in einen Bremssattel (16) eingesetzt zu werden, wobei die Feder (32) umfasst:
einen Belaghalterabschnitt, der gekrümmt ist, um einen Bogen zu formen, in welchem das entsprechende Ende des Bogens dazu ausgebildet ist, an dem Bremsbelag (20) anzugrenzen;
einen Verbindungsabschnitt (34), der dazu ausgebildet ist, die Feder (32) mit einem Belaghalter (30) oder einer Baugruppenöffnungsabdeckung zu verbinden;
einen Spannabschnitt (40), der dazu ausgebildet ist, gespannt und federnd anzuliegen und gegen den Belaghalter (30) oder die Baugruppenöffnungsabdeckung zu drücken;
wobei die Feder **dadurch gekennzeichnet ist, dass** der Belaghalterabschnitt dazu ausgebildet ist, den Bremsbelag (20) federnd radial in Richtung einer Welle (12) hin und axial von einer Bremsscheibe (14) wegzudrücken;
ein aufrauender Verschleißbereich (36), der dazu ausgebildet ist, mit dem Verschleißmaterial des Bremsbelags (20) derart verbunden zu werden, dass der Verschleißbereich abgetragen wird, wenn der Bremsbelag einen vorgegebenen Abnutzungsgrad erreicht hat, wobei der Spannabschnitt (40) sich von dem Rest der Feder (32) separiert; und dass
ein Anzeigeabschnitt (38) dazu ausgebildet ist, aus einer Baugruppenöffnung (28) in dem Bremssattel (16) und/oder durch eine Öffnung in einer Abdeckung über der Baugruppenöffnung (28) herauszuspringen, wenn sich der Spannabschnitt (40) von dem Rest der Feder (32) abspaltet.

10. Fahrzeug, das mit einer Scheibenbremsvorrichtung (10) nach einem der Ansprüche 1 bis 8 oder einer Feder (32) nach Anspruch 9 ausgestaltet ist.

11. Verwendung einer Scheibenbremsvorrichtung (10) nach einem der Ansprüche 1 bis 8 zum Bremsen einer Drehbewegung.

12. Verwendung einer Feder (32) nach Anspruch 9 zum Anzeigen, dass die Abnutzung an dem Bremsbelag einen vorgegebenen Grad erreicht hat.

## Revendications

1. Dispositif de frein à disque comprenant :
un disque de frein (14) ayant deux surfaces de friction opposées et adapté pour être accouplé à un arbre rotatif (12) ; et
un étrier de frein (16) adapté pour être accouplé à une partie non rotative d'une machine ou d'un véhicule, pour bouger indépendamment du disque de frein (14) et pour enjamber ce dernier au moyen de deux pièces latérales faisant partie intégrante de la fourche de frein (16) et s'étendant chacune le long d'une partie de la surface de friction respective ; ledit étrier de frein (16) étant en outre pourvu de garnitures de frein (20, 22) et d'un piston de frein (26) disposé dans une pièce latérale et adapté pour presser de manière réglable la garniture de frein (20) contre le disque de frein (14),
ledit dispositif de frein à disque étant **caractérisé en ce qu'**il comprend un ressort indicateur (32) adapté pour être mis sous tension lors du montage d'une garniture de frein (20), ledit ressort indicateur comprenant
une partie sacrificielle (36) accouplée au ressort indicateur, qui est adaptée pour être accouplée à la garniture de frein (20) et qui s'étend de manière à ce que la partie sacrificielle (36) soit usée par frottement contre le disque de frein (14) ou, d'une autre manière, s'use indépendamment d'une fixation dans le matériau d'usure de la garniture de frein (20), lorsque l'usure sur la garniture de frein (20) atteint un niveau prédéterminé ; et
un élément indicateur (38) accouplé au ressort indicateur (32) et adapté pour effectuer, sous l'effet de la force de tension du ressort indicateur (32), un mouvement de ressort lorsque la partie sacrificielle (36) a été usée ou, d'une autre manière, est usée indépendamment d'une fixation dans le matériau d'usure de la garniture de frein (20), indiquant ainsi que l'usure de la garniture de frein (20) a atteint le niveau prédéterminé.

2. Dispositif de frein à disque selon la revendication 1, dans lequel un ressort de rappel (32) est adapté pour tirer ou pousser les garnitures (22, 22) de façon à les écarter l'une de l'autre dans la direction axiale.

3. Dispositif de frein à disque selon la revendication 1, dans lequel le ressort de rappel et le ressort indicateur se présentent sous la forme d'un seul et même ressort (32).

4. Dispositif de frein à disque selon l'une quelconque des revendications 1 à 3, dans lequel le ressort (32) est également adapté pour pousser une garniture de frein (20, 22) vers l'arbre (12) dans la direction radiale.

5. Dispositif de frein à disque selon l'une quelconque des revendications 1 à 4, dans lequel le ressort (32) est un ressort en fil métallique.

6. Dispositif de frein à disque selon l'une quelconque des revendications 2 à 5, dans lequel l'étrier comprend un porte-garniture (18) accouplé à un point fixe sur un véhicule ou une machine, et un corps d'étrier (24) qui est supporté de façon à se déplacer linéairement dans la direction axiale et qui comprend lesdits organe de retenue de garniture (30) et piston de frein (26) ; et dans lequel la surface de butée du ressort (32) contre la garniture de frein (20, 22) constitue une surface de friction vis-à-vis du déplacement axial du corps d'étrier (24) par rapport à la garniture de frein (20, 22).

7. Dispositif de frein à disque selon l'une quelconque des revendications 2 à 6, dans lequel le ressort (32) est adapté pour avoir une première et une deuxième surfaces de butée contre la garniture de frein (20, 22) et s'étend de manière à ce que les surfaces de butée soient adaptées pour être essentiellement situées aussi loin l'une de l'autre que le permet la partie du la bordure de la garniture de frein (20, 22) qui fait face à l'ouverture d'assemblage (28).

8. Dispositif de frein à disque selon la revendications7, dans lequel la force de pression élastique de la première surface de butée du ressort (32) sur la garniture de frein (20, 22) est essentiellement indépendante de la force de pression élastique de la deuxième surface de butée du ressort (32) sur la garniture de frein (20, 22).

9. Ressort se présentant sous la forme d'un ressort en fil métallique (32) adapté pour être monté dans un étrier de frein (16), ledit ressort (32) comprenant
une section organe de retenue de garniture incurvée de façon à former un arc, dont les extrémités respectives sont adaptées pour venir en butée contre une garniture de frein (20) ;
une section accouplement (34) adaptée pour accoupler le ressort (32) à un organe de retenue de garniture (30) ou un cache d'ouverture d'assemblage ;
une section de tension (40) adaptée pour être mise sous tension et pour venir en butée et exercer une pression élastique contre l'organe de retenue de garniture (30) ou le cache d'ouverture d'assemblage ;
ledit ressort étant **caractérisé en ce que** la section organe de retenue de garniture est adaptée pour pousser de manière élastique la garniture de frein (20) vers un arbre (12) dans la direction radiale et axialement à distance d'un disque de frein (14) ;
une section sacrificielle (36) est adaptée pour être accouplée au matériau d'usure de la garniture de frein (20) de telle sorte que la section sacrificielle soit usée lorsque la garniture de frein a atteint un niveau d'usure prédéterminé, en conséquence de quoi la section de tension (40) se sépare du reste du ressort (32) ; et **en ce que**
une section indicateur (38) est adaptée pour sortir par effet ressort à travers une ouverture d'assemblage (28) formée dans l'étrier de frein (16) et/ou à travers un trou formé dans un cache disposé sur l'ouverture d'assemblage (28) lorsque la section tension (40) se sépare du reste du ressort (32).

10. Véhicule pourvu d'un dispositif de frein à disque (10) selon l'une quelconque des revendications 1 à 8 ou un ressort (32) selon la revendication 9.

11. Utilisation d'un dispositif de frein à disque (10) selon l'une quelconque des revendications 1 à 8 pour freiner un mouvement rotatif.

12. Utilisation d'un ressort (32) selon la revendication 9 pour indiquer que l'usure d'une garniture de frein a atteint un niveau prédéterminé.
